# FASCICULE DE BREVET EUROPEEN

(11) **EP 1 564 112 B1**
(45) Date de publication et mention de la délivrance du brevet: **12.12.2007**
(21) Numéro de dépôt: 05290034.7
(22) Date de dépôt: 06.01.2005
(51) Int. Cl.: B62D 21/11

(54) **Berceau modulable pour un véhicule automobile et véhicule automobile comportant un tel berceau**
Modulierbarer Hilfsrahmen für ein Kraftfahrzeug, und Kraftfahrzeug mit einem derartigen Hilfsrahmen
Versatile subframe for automobile, and automobile equipped with such a subframe

(30) Priorité: 13.02.2004 FR 0401483
(43) Date de publication de la demande: 17.08.2005
(73) Titulaire: Peugeot Citroën Automobiles S.A., 78140 Vélizy Villacoublay (FR)
(72) Inventeur: Janssens, Jean-Baptiste, 92400 Courbevoie (FR); Mallet, Cédric, 92330 Sceaux (FR); Daubannay, Alexandre, 92220 Bagneux (FR)
(74) Mandataire: Thinat, Michel

(56) Documents cités:
- EP-A- 0 678 441
- WO-A-90/05083
- DE-A- 4 129 538
- US-B1- 6 398 262
- US-B1- 6 733 021

## Description

L'invention concerne un berceau pour un train d'un véhicule automobile, ainsi qu'un véhicule automobile équipé d'un tel berceau.

Les véhicules automobiles à traction avant ont un train avant comportant un berceau servant d'une part au montage du train avant sous le châssis du véhicule automobile et d'autre part à la fixation des roues avant et des éléments nécessaires pour varier l'orientation des roues avant. Les véhicules à traction arrière ont en plus du train avant avec berceau également un train arrière avec berceau pour monter le train arrière sous le châssis.

Lorsque le moteur de ce véhicule est situé à l'avant du véhicule, il se pose le problème de devoir organiser une sorte de noeud de croisement formé par des éléments du véhicule tels que la ou les tubulures d'échappement du moteur et, en cas de traction arrière, l'arbre de transmission, et par le berceau et les différents éléments nécessaires pour la variation de l'orientation des roues dans la mesure ou ces éléments sont montés sur le berceau et/ou en liaison avec les roues.

Les éléments nécessaires pour la variation de l'orientation des roues avant sont essentiellement la crémaillère de direction et le mécanisme qui agit directement sur la crémaillère. Toutefois, lesdits éléments peuvent également comprendre, par exemple, des actionneurs de direction hydrauliques ou électriques.

Par ailleurs, la disposition des tubulures d'échappement varie selon le type de moteur : pour les moteurs à échappement vers l'arrière, les tubulures passent généralement au dessus du berceau, et pour les moteurs à échappement vers l'avant, ils passent sous le berceau.

La grande variété de trains avant et arrières nécessaire pour équiper les différents modèles de véhicules automobiles et la complexité du noeud de croisement décrit ci-avant, augmentée par le fait que les moteurs de ces véhicules sont équipés avec des échappements dont les tubulures passent soit au-dessus, soit par en dessous du berceau du ou des trains du véhicule, ont pour conséquence une très grande variété de berceaux.

Un exemple de la technique antérieure est divulgué par le document DE 4129538.

Le but de l'invention est de proposer un berceau conçu de manière à réduire la diversité nécessaire de types de berceaux.

Le but de l'invention est atteint avec un berceau pour un train d'un véhicule automobile ayant un châssis, qui a deux parties d'extrémité opposées dont chacune sert au moins au montage du berceau sous le châssis, et une partie transversale.

Selon l'invention, la partie transversale est constituée par une traverse distincte ayant un corps avec deux extrémités opposées pourvues de brides par lesquelles la traverse est montée respectivement sur l'une et sur l'autre de deux pièces formant les parties d'extrémité du berceau, et qui forment un angle avec l'étendue longitudinale de la traverse.

L'angle que les brides forment avec l'étendue longitudinale de la traverse peut être un angle droit, mais aussi un angle obtus, par exemple un angle de l'ordre de 130°.

Grâce à cette disposition selon l'invention, la traverse définit un passage pour un élément du véhicule pouvant passer au-dessus ou en dessous de la traverse, selon la position d'assemblage de la traverse.

L'avantage du berceau selon l'invention par rapport aux berceaux antérieurs repose sur le fait d'être un berceau modulaire. Il est constitué essentiellement par trois pièces dont deux pièces, les deux pièces formant les parties d'extrémités du berceau, peuvent être conçues de manière à être utilisables pour plusieurs types de berceaux. La troisième pièce du berceau selon l'invention, la partie transversale, est par contre une pièce spécifique pour un nombre réduit de types de berceaux, la réduction venant du fait qu'elle peut être montée dans deux positions différentes permettant ainsi à un élément du véhicule, tel que par exemple un échappement, de passer respectivement au-dessus ou en dessous du berceau, selon la position d'assemblage de la traverse.

Grâce à la modularité du berceau de l'invention, on peut combiner maintenant des pièces d'extrémité "multi types" (dans une situation idéale : des pièces d'extrémité standards) avec des traverses individuelles pouvant néanmoins être montées dans deux positions différentes, et réduire ainsi fortement la diversité des berceaux.

Pour pouvoir définir un passage suffisamment grand, la traverse est formée par un profilé allongé pourvu, à chacune de ses deux extrémités, d'une bride formant un angle avec l'étendue longitudinale de la traverse. Les deux brides s'étendent du même côté de la traverse.

La traverse est réalisée soit sous la forme d'une pièce moulée, soit sous la forme d'une pièce mécano-soudée. Pour former le berceau, la traverse et les pièces formant les parties d'extrémité du berceau sont liées entre elles soit par soudage avec un cordon de soudage à chaque extrémité de la traverse, soit par une liaison vissée.

Le but de l'invention est également atteint avec un véhicule automobile avec un train avant et un train arrière, au moins un des deux trains comprenant un berceau tel que celui décrit ci-avant.

En effet, le berceau selon l'invention n'est pas réservé au train avant d'un véhicule. Au contraire, l'invention peut très bien s'appliquer au train avant d'un véhicule à propulsion arrière ou à propulsion 4X4 ; on peut très bien imaginer un véhicule ayant une traction avant avec un moteur transversal et les tubulures d'échappement sous le berceau et donc la traverse en position haute. De même, on peut imaginer un véhicule à propulsion arrière ou à 4X4 avec un moteur longitudinal et la traverse en position basse pour loger la transmission longitudinale.

D'autres caractéristiques et avantages de l'invention ressortiront de la description ci-après d'un mode de réalisation du berceau, la description étant faite en référence aux dessins. Dans ces dessins :
- La figure 1 montre, en une vue éclatée, un berceau selon l'invention,
- La figure 2 montre le berceau selon l'invention dans une configuration permettant à un échappement de passer par en dessous du berceau ; et
- La figure 3 montre le berceau de l'invention dans une configuration permettant à un échappement de passer au-dessus du berceau.

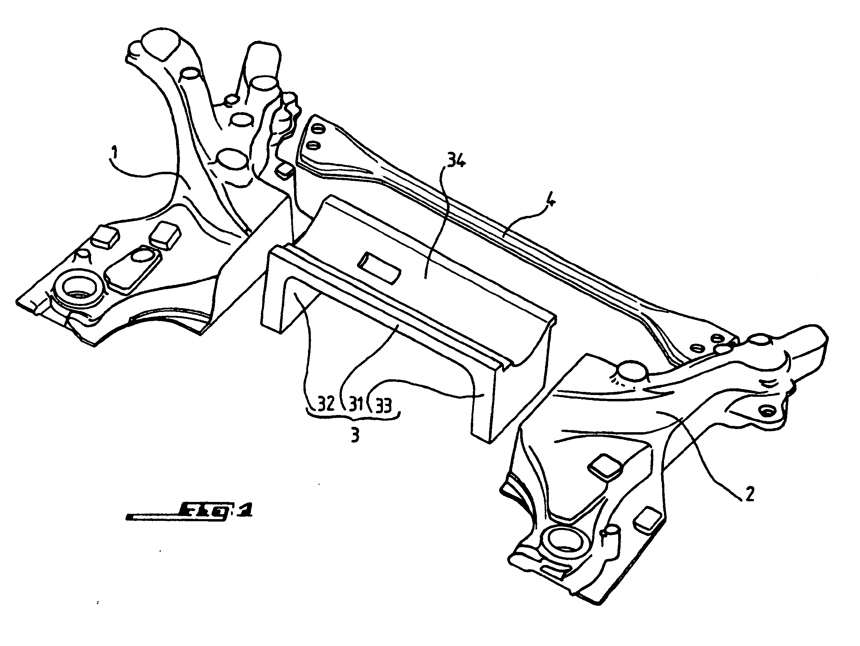

Le berceau représenté sur la figure 1 comprend deux parties d'extrémité opposées 1, 2 par lesquelles le berceau est monté sous le châssis d'un véhicule automobile et sur lesquelles sont montés les moyeux des roues avant et des éléments permettant de changer l'orientation des roues.

Le berceau comprend également une traverse 3 représentée comme une pièce moulée. La traverse comprend un profilé allongé 31 formant le corps de la traverse et deux brides 32, 33 disposées aux extrémités du profilé allongé 31. Les brides 32, 33 sont orientées sensiblement perpendiculairement par rapport à l'étendue longitudinale du profilé allongé 31 et dans la même direction. Ainsi, la traverse 3 présente sensiblement une forme en U, vu perpendiculairement par rapport à l'étendue longitudinale du corps 31 de la traverse.

Lorsque les deux pièces 1, 2 formant les parties d'extrémité du berceau, sont assemblées avec la traverse 3 par vissage, les brides 32, 33 sont pourvues d'orifices traversant permettant d'y introduire des vis destinées à pénétrer dans les pièces d'extrémité 1, 2.

Le corps 31 de la traverse 3 présente un enfoncement cylindrique 34 sur toute sa longueur. Cet enfoncement cylindrique 34 est destiné à recevoir des éléments tels que, par exemple, un actionneur de direction électrique destiné à agir sur une crémaillère traditionnelle de la direction du véhicule automobile.

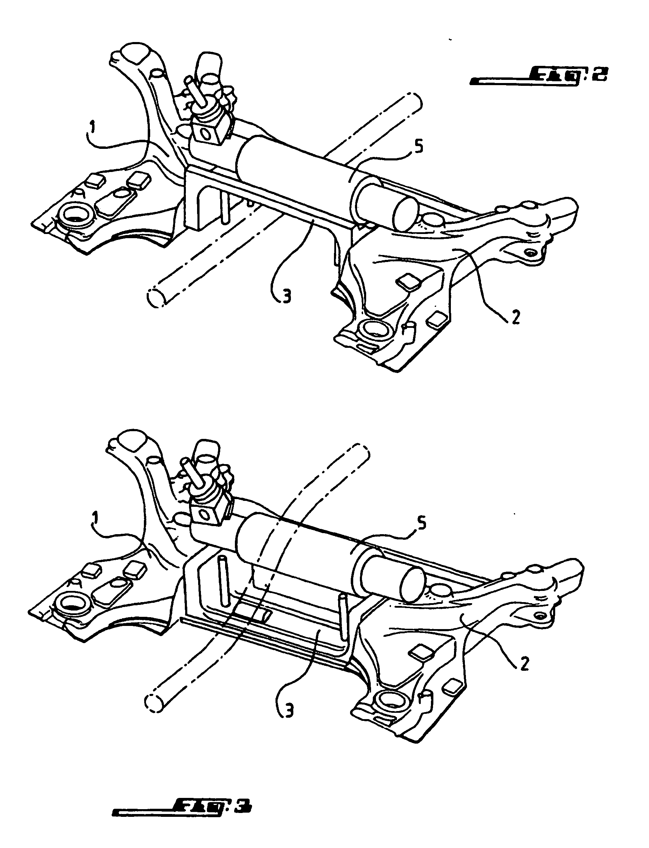

La traverse 3 est reliée aux parties d'extrémité 1, 2 selon l'une ou l'autre des deux positions représentées sur les figures 2 et 3. Selon la première position (figure 2), les brides 32, 33 s'étendent verticalement vers le bas lorsqu'un élément de véhicule tel que, par exemple, les tubulures d'un échappement du moteur entraînant les véhicules, est destiné à passer en dessous du berceau.

Selon la seconde position de montage (figure 3), les brides 32, 33 s'étendent verticalement vers le haut lorsque le berceau est monté sous le châssis du véhicule automobile. Cette seconde position est destinée au cas où un élément de véhicule tel que, par exemple, la tubulure de l'échappement, est destinée à passer au-dessus du berceau.

Quelque soit la position d'assemblage de la traverse 3 du berceau, le berceau modulable selon l'invention peut recevoir, comme les berceaux utilisés avant l'invention, des moyens 5 permettant de changer la direction des roues, par exemple une crémaillère traditionnelle entraînée par des moyens mécaniques également traditionnels ou un actionneur hydraulique ou électrique de direction respectivement à moteur déporté ou à moteur concentrique.

Sur les figures 2 et 3, l'emplacement de ce qui est appelé dans le cas de la présente description de manière générale un élément de véhicule pouvant passer au-dessus ou en dessous de la traverse, par exemple une tubulure d'un échappement, est indiqué en pointillés. Dans l'agencement représenté sur la figure 2, la tubulure d'échappement passe en dessous du berceau 3. Et dans l'agencement représenté sur la figure 3, la tubulure d'échappement passe au-dessus du berceau et, plus précisément, au-dessus de la crémaillère 5.

## Revendications

1. Berceau pour un train d'un véhicule automobile ayant un châssis, le berceau ayant deux parties d'extrémités opposées (1, 2) dont chacune sert au moins au montage du berceau sous le châssis, et une partie transversale (3),
et la partie transversale étant constituée par une traverse distincte (3) ayant un corps (31) avec deux extrémités opposées pourvues de brides (32, 33) par lesquelles elle est montée respectivement sur l'une et sur l'autre de deux pièces (1, 2) formant les parties d'extrémités du berceau, **caractérisé en ce que** les brides (32,33) forment un angle avec l'étendue longitudinale de la traverse, de manière que la traverse (3) définisse un passage pour un élément du véhicule pouvant passer au-dessus ou en dessous de la traverse, selon la position d'assemblage de la traverse.

2. Berceau selon la revendication 1, **caractérisé en ce que** la traverse est formée par un profilé allongé (31) pourvu, à chacune de ses deux extrémités, d'une bride (32, 33) orientée sensiblement perpendiculairement, les deux brides étant orientées dans la même direction.

3. Berceau selon la revendication 1 ou 2, **caractérisé en ce que** la traverse (3) est une pièce spécifique pour un type de châssis, alors que les pièces (1, 2) formant les parties d'extrémités du berceau sont utilisables pour différents types de châssis.

4. Berceau selon l'une quelconque des revendications 1 à 3, **caractérisé en ce que** la traverse (3) et les pièces (1, 2) formant les parties d'extrémités du berceau sont liées entre elles par soudage.

5. Berceau selon l'une quelconque des revendications 1 à 3, **caractérisé en ce que** la traverse (3) et les pièces (1,2) formant les parties d'extrémités du berceau sont liées entre elles par une liaison vissée.

6. Berceau selon l'une quelconque des revendications 1 à 5, **caractérisé en ce qu**'au moins la traverse (3) est une pièce moulée.

7. Berceau selon l'une quelconque des revendications 1 à 5, **caractérisé en ce qu**'au moins la traverse (3) est une pièce mécano-soudée.

8. Véhicule automobile avec un train avant et un train arrière, **caractérisé en ce qu**'au moins un des deux trains comprend un berceau selon l'une quelconque des revendications 1 à 7.

## Claims

1. Cradle for an axle system of a motor vehicle having a chassis, the cradle having two opposite end parts (1, 2), each of which is used at least for assembly of the cradle under the chassis, and a transverse part (3) made up of a separate cross-member (3) having a body (31) with two opposite ends provided with flanges (32, 33) through which it is mounted one both of the two parts (1, 2) forming the end parts of the cradle, respectively, **characterized in that** the flanges (32, 33) form an angle with the longitudinal extent of the cross-member, such that the cross-member (3) defines a passage for an element of the vehicle able to pass above or below the cross-member, according to the assembly position of the cross-member.

2. Cradle according to claim 1, **characterized in that** the cross-member is formed by an elongated profile (31) provided, at each of its two ends, with a flange (32, 33) oriented substantially perpendicularly, the two flanges being oriented in the same direction.

3. Cradle according to claim 1 or 2, **characterized in that** the cross-member (3) is a specific part for one type of chassis, while the parts (1, 2) forming the end parts of the cradle are usable for different types of chassis.

4. Cradle according to any of claims 1 to 3, **characterized in that** the cross-member (3) and the parts (1, 2) forming the end parts of the cradle are connected to each other by welding.

5. Cradle according to any of claims 1 to 3, **characterized in that** the cross-section (3) and the parts (1, 2) forming the end parts of the cradle are connected to each other by a screwed connection.

6. Cradle according to one of claims 1 to 5, **characterized in that** at least the cross-member (3) is a molded part.

7. Cradle according to any of claims 1 to 5, **characterized in that** at least the cross-member (3) is a mechanically welded part.

8. Motor vehicle with a front axle and a rear axle, **characterized in that** at least one of the two axle systems comprises a cradle according to any of claims 1 to 7.

## Patentansprüche

1. Hilfsrahmen für eine Achse eines Kraftfahrzeugs mit einem Chassis, wobei der Hilfsrahmen zwei Abschnitte entgegengesetzter Enden (1, 2) hat, von denen jeder mindestens zur Montage des Hilfsrahmens unter dem Chassis dient, und einen transversalen Abschnitt (3),
und dass der transversale Abschnitt von einem selbständigen Querträger (3) gebildet wird, mit einem Körper (31) mit zwei entgegengesetzten Enden, die mit Flanschen (32, 33) ausgestattet sind, durch die er an dem einen und an dem anderen der zwei Teile (1, 2) befestigt wird, die die Endabschnitte des Hilfsrahmens bilden, **dadurch gekennzeichnet, dass** die Flansche (32, 33) mit der Längsausdehnung des Querträgers einen Winkel bilden, so dass der Querträger (3) einen Durchgang für ein Element des Fahrzeugs definiert, das über oder unter dem Querträger hindurchgängig ist, je nach Montagestellung des Querträgers.

2. Hilfsrahmen nach Anspruch 1, **dadurch gekennzeichnet, dass** der Querträger von einem länglichen Profilblech (31) gebildet wird, das an jedem seiner zwei Enden mit einem etwa senkrecht ausgerichteten Flansch (32, 33) ausgestattet ist, wobei die zwei Flansche in dieselbe Richtung zeigen.

3. Hilfsrahmen nach Anspruch 1 oder 2, **dadurch gekennzeichnet, dass** der Querträger (3) ein spezielles Teil für einen Chassistyp ist, während die Teile (1, 2), die die Endabschnitte des Hilfsrahmens bilden, für verschiedene Chassistypen verwendbar sind.

4. Hilfsrahmen nach einem der Ansprüche 1 bis 3, **dadurch gekennzeichnet, dass** der Querträger (3) und die Teile (1, 2), die die Endabschnitte des Hilfsrahmens bilden, durch Schweißen miteinander verbunden sind.

5. Hilfsrahmen nach einem der Ansprüche 1 bis 3, **dadurch gekennzeichnet, dass** der Querträger (3) und die Teile (1, 2), die die Endabschnitte des Hilfsrahmens bilden, durch eine Schraubverbindung miteinander verbunden sind.

6. Hilfsrahmen nach einem der Ansprüche 1 bis 5, **dadurch gekennzeichnet, dass** mindestens der Querträger (3) ein Formteil ist.

7. Hilfsrahmen nach einem der Ansprüche 1 bis 5, **dadurch gekennzeichnet, dass** mindestens der Querträger (3) ein maschinengeschweißtes Teil ist.

8. Kraftfahrzeug mit einer Vorderachse und einer Hinterachse, **dadurch gekennzeichnet, dass** mindestens eine der beiden Achsen einen Hilfsrahmen nach einem der Ansprüche 1 bis 7 umfasst.
